# EUROPÄISCHE PATENTSCHRIFT

(11) **EP 2 171 658 B1**
(45) Veröffentlichungstag und Bekanntmachung des Hinweises auf die Patenterteilung: **14.06.2017**
(21) Anmeldenummer: 08775150.9
(22) Anmeldetag: 16.07.2008
(51) Int. Cl.: G06Q 10/00, B07C 3/00

(54) **VERFAHREN UND VORRICHTUNG ZUR ÜBERWACHUNG DES TRANSPORTS EINES GEGENSTANDS**
METHOD AND DEVICE FOR MONITORING THE TRANSPORT OF AN OBJECT
PROCÉDÉ ET DISPOSITIF PERMETTANT DE SURVEILLER LE TRANSPORT D'UN OBJET

(30) Priorität: 25.07.2007 DE 102007034661; 13.02.2008 DE 102008008967
(43) Veröffentlichungstag der Anmeldung: 07.04.2010
(73) Patentinhaber: Siemens Aktiengesellschaft, 80333 München (DE)
(72) Erfinder: BLÄSCHE, Dietrich, 78224 Singen (DE)
(86) Internationale Anmeldenummer: PCT/EP2008/059330
(87) Internationale Veröffentlichungsnummer: WO 2009/013209

(56) Entgegenhaltungen:
- DE-A1-102005 040 662
- US-A1- 2003 014 375

## Beschreibung

Die Erfindung betrifft ein Verfahren und eine Vorrichtung zur Überwachung des Transports eines Gegenstands, insbesondere einer Postsendung.

In US 2003/0014375 A1 wird ein Verfahren mit den Merkmalen des Oberbegriffs des Anspruchs 1 und eine Vorrichtung mit den Merkmalen des Oberbegriffs des Anspruchs 11 beschrieben.

In US 2003/0014375 A1 werden ein Verfahren und eine Vorrichtung beschrieben, um den Transport einer Postsendung zu überwachen. Die Postsendung ist mit einer Kennzeichnung der Zieladresse versehen, an dem die Postsendung zu transportieren ist. Im Ausführungsbeispiel durchläuft die Postsendung ein Abgangs-Sortierzentrum ("original distribution center"), zwei Zwischen-Sortierzentren und ein Ziel-Sortierzentrum ("destination distribution center"). Jede Postsendung wird mit einer eindeutigen Kennung ("ID-key") versehen. Diese Kennung wird beispielsweise in Form eines Strichmusters auf die Postsendung aufgedruckt oder die Postsendung wird mit einem RFID-Chip versehen, in dem die Kennung in rechnerverfügbarer Form abgespeichert ist. Die Abfolge von Transportvorgängen ("shipping sequence") für eine Postsendung wird in einem Datensatz abgespeichert. Während des Transports wird die Zieladresse der Postsendung gelesen. In dem Datensatz für die Postsendung werden diese Kennung sowie die gelesene Absender- und Zieladresse abgespeichert. Jedes mal, wenn die Postsendung ein Sortierzentrum erreicht, wird versucht, die Kennung zu lesen. An das Ausgangs-Sortierzentrum werden Informationen darüber gesandt, welches Sortierzentrum die Postsendung nunmehr erreicht hat.

In US 2004/0249652 A1 werden ein Verfahren und eine Vorrichtung beschrieben, um den Transport und die Auslieferung von Gegenständen, insbesondere von Postsendungen, zu überwachen. Der Gegenstand ist mit zwei Strichmustern ("bar codes") versehen, die den Gegenstand eindeutig kennzeichnen. Während des Transports durchläuft der Gegenstand mehrere Bearbeitungsstationen. In jeder Bearbeitungsstation werden die Strichmuster des Gegenstands abgescannt. Der Zeitpunkt, an dem die Strichmuster in dieser Bearbeitungsstation abgescannt wird, wird erfasst und gemeinsam mit einer Kennung der Bearbeitungsstation an eine zentrale Überwachungsstation mit Datenbank ("electronic shipping office" mit "integrated data system") übermittelt. Dadurch wird der Weg des Gegenstands verfolgt.

Der Versender des Gegenstands übermittelt in einer Ausführungsform zusätzlich Transportinformationen ("advanced shipping note") in elektronischer Form an den Transporteur. Diese Transportinformationen umfassen einen Zeitpunkt, an dem der Gegenstand dem Transporteur übergeben wurde, ein gewünschtes Zustelldatum und weitere Spezifikationen für den Transport.

In US 2003/0050874 A1 wird vorgeschlagen, den Ort zu verfolgen, an dem sich ein zu transportierender Gegenstand gerade befindet. Der Gegenstand wird mit einem elektronischen Begleitzettel ("ticket") versehen, z. B. in Form eines Strichmusters ("bar codes") oder eines "RFID tags". Im Begleitzettel ist z. B. angegeben, wohin und an wen der Gegenstand zu transportieren ist. Bei Auslieferung des Gegenstands wird der Begleitzettel gelesen, und der tatsächliche Ort und Zeitpunkt der Auslieferung werden abgespeichert.

Um zu vermeiden, dass eine Postsendung mit einer Kennung versehen werden muss, sind Verfahren bekannt geworden, um Postsendungen anhand eines Merkmalswerte-Vektors zu identifizieren. In DE 102005040662 A1 wird vorgeschlagen, Merkmale zu verwenden, die sich mit einem minimalen Aufwand messen lassen. Die Postsendung wird anhand der dergestalt gemessenen Merkmale identifiziert.

Der Erfindung liegt die Aufgabe zugrunde, ein Verfahren mit den Merkmalen des Oberbegriffs des Anspruchs 1 und eine Vorrichtung mit den Merkmalen des Oberbegriffs des Anspruchs 11 bereitzustellen, bei dem der Gegenstand nicht mit einer eindeutigen Kennung zu versehen sein braucht.

Die Aufgabe wird durch ein Verfahren mit den Merkmalen des Anspruchs 1 und eine Vorrichtung mit den Merkmalen des Anspruchs 11 gelöst. Vorteilhafte Ausgestaltungen sind in den Unteransprüchen angegeben.

Der Gegenstand ist mit einer Kennzeichnung eines Zustellpunkts versehen. Beispielsweise hat der Gegenstand die Form einer Postsendung, und eine Adresse ist auf dem Gegenstand angegeben. Der Gegenstand wird zu diesem Zustellpunkt transportiert.

Der Gegenstand durchläuft während des Transports zum Zustellpunkt mindestens einmal eine Sortieranlage. Möglich ist, dass der Gegenstand zweimal dieselbe Sortieranlage oder mehrere verschiedene Sortieranlage durchläuft. Die Sortieranlage oder die beiden Sortieranlagen sind mit einem Zentralrechner verbunden.

Die mindestens eine Sortieranlage liest die Zustellpunkt-Kennzeichnung, mit der der Gegenstand versehen ist. Diese gelesene Zustellpunkt-Kennzeichnung wird an einen Zentralrechner übermittelt.

Weiterhin misst die mindestens eine Sortieranlage mehrere vorgegebene kennzeichnende Parameter. Die Werte dieser kennzeichnenden Parameter bilden einen ersten Merkmalsvektor für den Gegenstand. Die Sortieranlage generiert diesen Merkmalsvektor mit den Parameterwerten. Dieser Merkmalsvektor unterscheidet den Gegenstand von allen anderen Gegenständen unterscheidet, die innerhalb eines vorgegebenen Zeitraums die Sortieranlage durchlaufen haben.

Der Zentralrechner speichert die übermittelte Zustellpunkt-Kennzeichnung ab und erzeugt einen Datensatz für den Gegenstand, der die übermittelte Zustellpunkt-Kennzeichnung umfasst.

Die Sortieranlage löst abhängig von der gelesenen Zustellpunkt-Kennzeichnung eine Fortsetzung des Transports des Gegenstands an den Zustellpunkt aus.

Beim Abschluss des Transports werden erneut die Werte gemessen, die die vorgegebenen kennzeichnenden Parameter für den Gegenstand annehmen. Ein zweiter Merkmalsvektor für den Gegenstand wird generiert. Dieser zweite Merkmalsvektor umfasst diese Parameter-Werte.

Der Zeitpunkt, an dem der Transport des Gegenstands abgeschlossen wird, wird gemessen.

An den Zentralrechner werden Informationen über den Transport des Gegenstands übermittelt. Diese Informationen umfassen
- den gemessenen Zeitpunkt und
- den zweiten Merkmalsvektor.

Der Zentralrechner ermittelt, von welchem derjenigen Gegenstände, die im vorgegebenen Zeitraum die Sortieranlage durchlaufen haben, die übermittelten Informationen stammen. Hierfür wertet der Zentralrechner die übermittelten Informationen aus. Beim Auswerten vergleicht der Zentralrechner den übermittelten zweiten Merkmalsvektor mit abgespeicherten Merkmalsvektoren. Dadurch findet der Zentralrechner denjenigen Datensatz, der für den Gegenstand angelegt wurde, nachdem der Gegenstand die Sortieranlage durchlaufen hat.

Die Erfindung spart die Notwendigkeit ein, den Gegenstand, dessen Transport überwacht werden soll, mit einer eindeutigen Kennung zu versehen. Dadurch wird insbesondere der Schritt eingespart, ein Strichmuster auf den Gegenstand zu drucken oder den Gegenstand mit einem Datenspeicher zu verbinden. Vielmehr wird der Gegenstand anhand des Merkmalsvektors identifiziert.

Vorzugsweise wird zusätzlich eine Kennung gelesen, mit dem der Zustellpunkt versehen ist. In einer Ausgestaltung wird die geographische Position ermittelt, an dem sich der Gegenstand bei Abschluss des Transports tatsächlich befindet, und mit einer Soll-Position verglichen.

Im Folgenden wird die Erfindung anhand eines Ausführungsbeispiels beschrieben. Dabei zeigt:

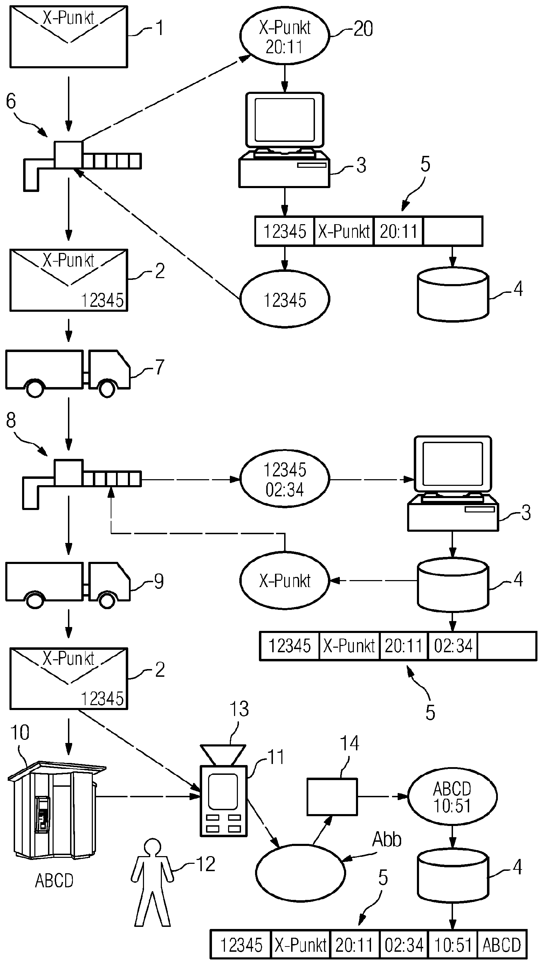

- Fig. 1: schematisch die Verfahrensschritte des Ausführungsbeispiels.
- Fig. 2:
- Fig. 3:
- Fig. 4:

Im Ausführungsbeispiel wird die Erfindung verwendet, damit ein Transporteur, welcher Postsendungen transportiert und zustellt, die Zustellung dieser Postsendungen überwacht. Der Transporteur setzt eine solche Überwachung vor allem mit folgenden Zielen ein:
- Der Transporteur will dem Versender und dem Empfänger des Gegenstands nachweisen, dass und wann die Postsendung beim Empfänger eingetroffen ist.
- Der Transporteur will überprüfen, in welchen Briefkasten / in welches Postfach ein Zusteller die Postsendung eingelegt hat bzw. wem er sie persönlich übergeben hat.
- Er will die Positionen und räumliche Verteilung von Zustellpunkten (Briefkästen / Postfächer) ermitteln und dadurch eine zentrale Zustelldatenbank aktualisieren.

Der Absender versieht die Postsendung mit Angaben zu einem gewünschten Zustellpunkt. Diese Angaben umfassen bevorzugt folgende Informationen:
- eine Bezeichnung für den Empfänger der Postsendung, z. B. dessen Name oder Firma,
- eine Kennzeichnung einer Straße und einer Hausnummer oder eine Kennzeichnung einer Postfachnummer eines Orts oder eine Kennzeichnung einer Paketfachanlage,
- die Postleitzahl oder den ZIP Code für diesen Ort.

Die Postsendung ist also an einen vorgegebenen Zustellpunkt zu transportieren, beispielsweise an einen bestimmten Briefkasten eines Empfängers oder ein bestimmtes Postfach.

Weiterhin ist es möglich, dass der Absender die Postsendung mit einer Vorausverfügung ("endorsement") und/oder einer Transportspezifikation für diese Postsendung versieht. Eine solche Vorausverfügung legt fest, was mit der Postsendung gemacht werden soll, wenn sie nicht an den angegebenen Empfänger ausgeliefert werden kann. Eine Transportspezifikation legt fest, welche Anforderungen der Transport der Postsendung erfüllen soll, z. B. Zustellung am Tag nach der Einlieferung oder "first class mail".

Fig. 1 zeigt schematisch die Verfahrensschritte des Ausführungsbeispiels. In Fig. 1 sind Materialflüsse durch durchgezogene Linien und Datenflüsse durch gestrichelte Linien dargestellt. Der Absender übergibt eine Postsendung 1 einem Transporteur. Diese Postsendung 1 soll an einen Zustellpunkt 10 mit der Kennzeichnung X-Punkt transportiert werden. Die Kennzeichnung X-Punkt ist als Anschrift auf der Postsendung 1 vermerkt.

Die Postsendung durchläuft während des Transports vom Einlieferungsort zum Zustellpunkt 10 mindestens zweimal eine Sortieranlage. Zuerst durchläuft sie diejenige Sortieranlage 6, die für den Einlieferungsort zuständig ist. Diese Sortieranlage 6, die im Folgenden "erste Sortieranlage" genannt wird, liest die Angaben "X-Punkt" zum Zustellpunkt 10 oder wenigstens den Ort, an den die Postsendung 1 zu transportieren ist. Die erste Sortieranlage 6 versucht zunächst, die Angaben zum Zustellpunkt 10 automatisch mittels OCR zu erkennen. Gelingt diese automatische Erkennung nicht, so wird ein Abbild der Oberfläche der Postsendung 1 an eine Videocodierstation gesandt, und ein Bearbeiter wertet das Abbild visuell aus und gibt den erkannten Ort ein.

Falls beim Lesen Mehrdeutigkeiten auftreten, so sendet die erste Sortieranlage 6 eine Anfrage an eine zentrale Adress-Datenbank. Dadurch ermittelt die Sortieranlage 6 z. B., welche Straßen es in einem bestimmten Ort gibt, und sucht nach einem Zustellpunkt, der zum übermittelten Leseergebnis passt und in der Adress-Datenbank abgespeichert ist.

Für die Postsendung 1 wird eine eindeutige Kennung generiert. Diese Kennung wird aber nicht auf die Postsendung aufgedruckt. Im Beispiel der Fig. 1 wird für die Postsendung 1 die Kennung 12345 generiert. Die Postsendung mit dieser Kennung wird als Postsendung 2 bezeichnet.

Diese Kennung wird im Ausführungsbeispiel während des Transports der Postsendung automatisch generiert. Nicht erforderlich ist es, eine solche Kennung bereits bei der Einlieferung der Postsendung 1 in einem Postamt zu generieren, wie dies heutzutage z. B. dann der Fall ist, wenn eine Postsendung als Einschreiben versandt werden soll.

Diese Kennung ist für einen vorgegebenen Zeitraum eindeutig, d. h. unterscheidet diese Postsendung 2 von allen anderen Postsendungen, die der Transporteur im Zeitraum transportiert. Der Zeitraum beträgt mehrere Tage oder sogar einige Wochen.

Bevorzugt ist die erste Sortieranlage 6 mit einem Zentralrechner 3 verbunden, der seinerseits Lese- und Schreibzugriff auf eine zentrale Protokollierungs-Datenbank 4 besitzt. Der Zentralrechner 3 generiert für jede Postsendung jeweils einen Datensatz und speichert ihn in dieser Protokollierungs-Datenbank 4 ab. In Fig. 1 wird beispielhaft der Datensatz 5 für die Postsendung 2 gezeigt.

Der Zentralrechner 3 generiert in einer Ausführungsform automatisch die Kennung für die Postsendung 2, die innerhalb des vorgegebenen Zeitraums eindeutig ist. Weil alle Sortieranlagen des Transporteurs mit demselben Zentralrechner 3 verbunden sind, ist gewährleistet, dass die generierte Kennung tatsächlich eindeutig ist.

Das Generieren eines Datensatzes für eine Postsendung wird in einer Ausgestaltung dadurch ausgelöst, dass die Postsendung zum ersten Mal eine Sortieranlage durchläuft. Diese erste Sortieranlage 6 übermittelt Informationen über die Postsendung 1 an den Zentralrechner 3. Zu diesen übermittelten Informationen gehören die Kennzeichnung X-Punkt des Zustellpunkts - oder wenigstens diejenigen Angaben zum Zustellpunkt 10, die erkannt wurden - sowie der Zeitpunkt, an dem die erste Sortieranlage 6 den Zustellpunkt 10 erkannt hat. Im Beispiel der Fig. 1 durchlief die Postsendung um 20:11 Uhr die erste Sortieranlage 6.

Möglich ist auch, dass der Ort, an den die Postsendung zu transportieren ist, ein Bestandteil der Kennung 12345 ist und die übrigen Bestandteile der Kennung die Postsendung 2 von allen anderen Postsendungen, die im Zeitraum an denselben Ort zu transportieren sind, unterscheidet. Eine solche Kombination vom Ort und zusätzlicher Kennung ist aus DE 19644249 C1 bekannt. Diese Ausgestaltung erfordert weniger unterschiedliche Kennungen. Im vorliegenden Ausführungsbeispiel wird aber die Kennung aber nicht auf die Postsendung 1 aufgedruckt.

In der in Fig. 1 gezeigten Ausgestaltung generiert der Zentralrechner 3 die Kennung aufgrund einer Anforderung der ersten Sortieranlage 3 und übermittelt diese Kennung an die erste Sortieranlage 6. In einer alternativen Ausgestaltung generiert die erste Sortieranlage 6 selber diese Kennung. Um zu vermeiden, dass zwei verschiedene Sortieranlagen im Zeitraum dieselbe Kennung generieren, ergänzt die Sortieranlage 6 die Kennung um eine eindeutige Kennzeichnung für sich selbst. Z. B. eine laufende Nummer, die die erste Sortieranlage 6 von allen anderen Sortieranlagen des Transporteurs unterscheidet.

Der Datensatz 5 in der Protokollierungs-Datenbank 4 umfasst die eindeutige Kennung der Postsendung 2. Eine Information über eine Vorausverfügung oder eine Transportspezifikation, die die erste Sortieranlage 6 erkannt hat, wird ebenfalls als Teil des Datensatzes 5 in der Protokollierungs-Datenbank 4 abgespeichert.

In einer Ausgestaltung druckt die erste Sortieranlage 6 ein Strichmuster auf die Postsendung 2, der als "delivery bar code" fungiert. Durch das Strichmuster werden folgende Informationen codiert:
- den gelesenen Zustellpunkt 10 der Postsendung 2 und
- falls vorhanden, Vorausverfügungen für diese Postsendung 2.

Die Ausgestaltung mit dem "delivery bar code" hat den Vorteil, dass für den weiteren Transport der Postsendung 2 eine Datenverbindung mit dem Zentralrechner 3 nicht zwingend erforderlich ist. Jedoch hat sie den Nachteil, dass das Strichmuster recht lang werden kann, insbesondere wenn das Strichmuster zusätzlich eine Vorausverfügung oder eine Transportspezifikation codiert.

Nachdem die erste Sortieranlage 6 den Zustellpunkt gelesen hat, mit dem die Postsendung 2 versehen ist, wird die Postsendung 2 weiter transportiert. Sie wird zu derjenigen Sortieranlage 8 transportiert, die für den ermittelten Zustellpunkt 10 zuständig ist. Die erste Sortieranlage 6 kann zugleich als zweite Sortieranlage 8 fungieren. Diese Sortieranlage 8, die im Folgenden als zweite Sortieranlage bezeichnet wird, liest das maschinenlesbare Strichmuster für den Zustellpunkt auf der Postsendung 2 und ermittelt durch Auswertung der Kennzeichnung X-Punkt den Zustellpunkt 10 und ggf. eine Vorausverfügung und/oder eine Transportspezifikation.

In einer Ausgestaltung fungiert das Strichmuster als "delivery bar code". Jede Sortieranlage, durch die die Postsendung 2 läuft, ermittelt die Zustelladresse durch Auswertung dieses Strichmusters.

In einer bevorzugten Ausgestaltung wird keine eindeutige Kennung auf der Postsendung 2 angebracht, sondern entweder ein Strichmuster in Form eines "delivery bar codes" oder überhaupt kein Strichmuster. Die Kennung wird lediglich als Teil des Datensatzes 5 für die Postsendung 2 in der Protokollierungs-Datenbank 4 abgespeichert. Die Postsendung 2 wird während des Transports mit Hilfe eines Merkmalsvektors identifiziert. Dieser Merkmalsvektor besteht aus den Werten von kennzeichnenden Parametern derjenigen Oberfläche der Postsendung 2, die die Angaben zum Zustellpunkt 10 trägt. Beispiele für diese Parameter sind:
- Angaben zum Zustellpunkt 10, z. B. Postleitzahl, Ort, Straße, Hausnummer und/oder Postfachnummer,
- Lage und Größe des Blocks mit der Adresse,
- Höhe und Breite der Postsendung 2,
- Verteilung von Grautönen, Farben und Glanzwerten auf der Oberfläche der Postsendung 2 und/oder
- Position, Größe und Art des Freimachungsvermerks auf der Postsendung (z. B. Briefmarke, Freistempler).

Welche Parameter verwendet werden, ist vorgegeben, und zwar einheitlich für alle Postsendungen, die der Transporteur transportiert.

Jede Sortieranlage, durch die Postsendung durchläuft, ermittelt die Werte dieser kennzeichnenden Parameter. Diese Werte, angeordnet in einer vorgegebenen Reihenfolge, bilden den kennzeichnenden Merkmalsvektor für die Postsendung.

Die erste Sortieranlage 6 (die, die für den Einlieferungsort zuständig ist) ermittelt zum ersten Mal einen Merkmalsvektor für die Postsendung. Sie übermittelt diese Merkmalsvektor an den Zentralrechner 3, und zwar in geeignet codierter Form. Der Zentralrechner 3 speichert diesen codierten Merkmalsvektor in der Protokollierungs-Datenbank 4 ab, und zwar als Teil des Datensatzes 5 für die Postsendung.

Wenn die Postsendung 2 erneut eine Sortieranlage durchläuft, so misst diese zweite Sortieranlage 8 ebenfalls die kennzeichnenden Parameter und generiert einen Merkmalsvektor. Dieser Merkmalsvektor wird wiederum an den Zentralrechner 3 übermittelt. Der Zentralrechner 3 vergleicht den übermittelten Merkmalsvektor mit allen Merkmalsvektoren, die in der Protokollierungs-Datenbank 4 abgespeichert sind. Dadurch wird unter den abgespeicherten Merkmalsvektoren derjenige Merkmalsvektor ermittelt, der dem generierten Merkmalsvektor am ähnlichsten ist. Der Datensatz 5, zu dem der ähnlichste Merkmalsvektor gehört, liefert den erkannten Zustellpunkt 10 sowie ggf. eine Vorausverfügung und/oder eine Transportspezifikation - oder die Information, dass weder eine Vorausverfügung noch eine Transportspezifikation vorliegen. Vorzugsweise übermittelt die zweite Sortieranlage 8 zusätzlich den Zeitpunkt, an dem die Postsendung 2 die zweite Sortieranlage 8 durchläuft, an den Zentralrechner 3. Der Zentralrechner 3 ergänzt den Datensatz 5 in der Datenbank 4 für die Postsendung 2 um diesen zweiten Zeitpunkt. Im Beispiel der Fig. 1 durchlief die Postsendung 2 um 2:34 Uhr die zweite Sortieranlage 8.

Die zweite Sortieranlage 8 löst einen Weitertransport der Postsendung 2 an den Zustellpunkt 10 aus. Hierfür verwendet die zweite Sortieranlage 8 entweder das Ergebnis der Decodierung des "delivery bar codes" oder die Antwort des Zentralrechners auf die Anfrage der zweiten Sortieranlage 8, wobei die Anfrage den gelesenen "ID bar code" umfasst. Im Beispiel der Fig. 1 wird die Postsendung 2 mit einem zweiten Transportfahrzeug 9 zum Zustellpunkt 10 transportiert. Durch die Auslieferung der Postsendung 2 zum Zustellpunkt 10 wird der Transport der Postsendung 2 beendet.

Ein Zusteller 12 stellt die Postsendung 2 dem spezifizierten Empfänger zu. Beispielsweise legt er die Postsendung 2 in einen Briefkasten oder ein Postfach des Empfängers oder in ein Fach einer Paketfachanlage. Im Beispiel der Fig. 1 ist der Zustellpunkt eine Paketfachanlage 10. In welches Fach der Anlage 10 der Zusteller 12 die Postsendung 2 einlegt, wird nicht vorab festgelegt, sondern hängt von der aktuellen Belegung der Fächer der Paketfachanlage 10 ab.

Der Transport der Postsendung 2 an den Zustellpunkt 10 wird dadurch abgeschlossen, dass ein Zusteller 12 die Postsendung zum Zustellpunkt 10 befördert und dort in einen spezifizierten Behälter, z. B. einen Briefkasten oder ein Postfach, ablegt oder die Postsendung direkt dem spezifizierten Empfänger übergibt.

Der Zusteller 12 verwendet im Ausführungsbeispiel ein tragbares Lesegerät 11. Der Zusteller 12 hat das Lesegerät 11 vorzugsweise am Körper befestigt, so dass es ihn in seiner Arbeit möglichst wenig behindert. Beispielsweise hat er sich das Lesegerät 11 am Gürtel befestigt oder trägt es vor der Brust. Der Zusteller 12 hat eine persönliche Kennung eingegeben, so dass das Lesegerät 11 seinen aktuellen Benutzer "kennt".

Typischerweise entnimmt der Zusteller 12 die Postsendung 2 aus einem Transportbehälter und legt sie dann in den spezifizierten Briefkasten / das vorgegebene Postfach / ein Paketfach der Anlage 10. Vorzugsweise führt der Zusteller 12 die Postsendung 2 hierbei am Lesegerät 11 vorbei, nachdem er sie aus diesem Transportbehälter entnommen hat und bevor er sie in den Briefkasten / das Postfach / die Paketfachanlage einlegt oder sie dem Empfänger persönlich übergibt. Der Zusteller 12 betätigt einen Knopf oder ein anderes Betätigungselement des Lesegeräts 11. Diese Handlung löst einen Lesevorgang aus, der im Folgenden beschrieben wird.

Bevorzugt umfasst das Lesegerät 11 eine Kamera 13 oder ein sonstiges Bildaufnahmegerät. Diese Kamera 13 erzeugt ein digitales Abbild Abb der Postsendung 2. Dieses digitale Abbild Abb umfasst ein Abbild der Zustellpunkt-Kennzeichnung, mit der die Postsendung 2 versehen ist. Falls die Postsendung 2 mit einem Strichmuster versehen ist, so umfasst das Abbild zusätzlich ein Abbild dieses Strichmusters.

Das Abbild Abb wird vom Lesegerät 11 zu einer Auswerteeinheit 14 übermittelt. Die Auswerteeinheit 14 wertet das Abbild Abb aus und erzeugt dadurch einen Merkmalsvektor für die Postsendung 2. Dieser Merkmalsvektor wird mit Merkmalsvektoren von Datensätzen verglichen, die in der zentralen Datenbank 4 abgespeichert sind. Dadurch wird derjenige Datensatz 5 ermittelt, der von der Postsendung 2 stammt und der für diese Postsendung 2 generiert wurde.

Das Lesegerät 11 misst außerdem den Zeitpunkt, an dem der Zusteller die Postsendung übergeben hat. Es generiert einen Zeitstempel. Im Beispiel der Fig. 1 hat das Lesegerät 11 um 10:51 Uhr die Kennung der Postsendung 2 erfasst.

Der gemessene Zeitpunkt liefert eine Suchraumeinschränkung bei der Suche nach dem Datensatz 5 für die Postsendung 2. Zum Datensatz 5 gehören die Zeitpunkte, an denen die Postsendung 2 die erste Sortieranlage 6 und die zweite Sortieranlage 8 durchlaufen hat. Im Ausführungsbeispiel sind dies die Zeitpunkte 20:11 Uhr und 02:34 Uhr für die Postsendung 2. Auch für andere Postsendungen sind derartige Zeitpunkte abgespeichert. Aus diesen Zeitpunkten wird unter Verwendung von zu erwartenden Transportzeiten für jede Postsendung jeweils ein Zeitraum abgeleitet, in dem diese Postsendung den Zustellpunkt 10 erreicht hat. Vorzugsweise wird eine Suchraumeinschränkung auf diejenigen Postsendungen vorgenommen, die gemäß der Vorhersage zum tatsächlich gemessenen Zeitpunkt den Zustellpunkt 10 erreichen.

Eine weitere Suchraumeinschränkung wird durch den Zustellpunkt 10 selber vorgegeben. Gesucht wird nach den Datensätzen für Postsendungen, die zum Zustellpunkt 10 zu transportieren sind.

In einer Fortbildung ist das Lesegerät 11 außerdem mit einem Positions-Messgerät ausgestattet, z. B. einem Empfänger für das "Global Positioning System" (GPS) oder einem ähnlichen System. Dieses Messgerät misst die Position, an dem es sich in dem Moment befindet, an dem der Zusteller das Betätigungselement betätigt. Beispielsweise betätigt der Zusteller 12 das Betätigungselement dann, wenn er und damit das Lesegerät 11 sich vor einer Briefkastenanlage oder einer Paketfachanlage 10 befinden und der Zusteller 12 die Postsendung 2 in ein Fach der Anlage einlegt. Das Messgerät misst dann eine Position, die um einen Betrag von der Position der Anlage abweicht, der kleiner als die größte Abmessung der Anlage ist. Somit misst das Messgerät de facto die Position der Anlage. Diese Anlage befindet sich in der Regel außerhalb von Gebäuden, so dass ein GPS-Empfänger gut funktioniert.

Die Ausgestaltung mit dem Positions-Messgerät erfordert keine zusätzliche apparative Ausgestaltung der Zustellpunkte. Jedoch kann es vorkommen, dass der Zustellpunkt sich in einem geschlossenen Gebäude befindet und das Positions-Messgerät in geschlossenen Gebäuden nicht fehlerfrei arbeitet. Falls als Zustellpunkt ein Briefkasten oder Postfach gewählt wurde, das sich in einer Briefkastenanlage befindet, so lässt sich durch eine Positionsmessung außerdem nur die Anlage ermitteln, aber nicht der Zustellpunkt innerhalb der Anlage. Im Falle einer Paketfachanlage 10 lässt sich ebenfalls nur die Position der Anlage ermitteln, aber nicht ein einzelnes Fach.

Daher ist in einer alternativen Fortbildung auch der Zustellpunkt 10 mit einer maschinenlesbaren Codierung versehen. Diese Codierung codiert eine Kennung, die den Zustellpunkt 10 von allen anderen Zustellpunkten innerhalb eines bestimmten Gebiets, z. B. eines Landes, unterscheidet. Jedes Fach einer Briefkasten- oder Paketfachanlage ist mit einer eigenen individuellen Kennung versehen. Das Lesegerät 11 ermittelt dann, wenn der Zusteller 12 das Betätigungselement betätigt hat, diese Codierung.

Im Beispiel der Fig. 1 wird beim Abschluss des Transports ein dann freies Fach der Anlage 10 ausgewählt. Dieses Fach der Paketfachanlage 10 ist mit der Kennung ABCD versehen. Das Lesegerät 11 ermittelt zusätzlich die Codierung der Kennung ABCD. Auch diese Kennung ABCD wird an die Auswerteeinheit 14 und von dieser an den Zentralrechner 3 übermittelt.

Beispielsweise ist jeder Zustellpunkt mit einem Strichmuster versehen, den das Lesegerät 11 liest. Diese Ausgestaltung ist besonders einfach, weil sich derselbe Bar-Code-Scanner 13 verwenden lässt, der auch schon verwendet wird, um ein Strichmuster auf der Postsendung 2 zu scannen. Jedoch birgt diese Ausgestaltung die Gefahr der Manipulation: ein Strichmuster an einem Zustellpunkt lässt sich relativ leicht kopieren oder entfernen, so das das Lesegerät 11 in Wirklichkeit ein Strichmuster an einem anderen Ort scannt.

Eine andere Ausgestaltung verringert die Gefahr der Manipulation deutlich. Hierbei ist jeder Zustellpunkt mit einem lokalen Datenspeicher, z. B. einem RFID-Chip, fest verbunden. In diesem lokalen Datenspeicher ist eine Kennzeichnung X-Punkt des Zustellpunkts 10 abgespeichert. Das Lesegerät 11 umfasst eine Komponente, die die Kennzeichnung in diesem Datenspeicher auszulesen vermag.

In allen Ausführungsformen wird eine temporäre Datenverbindung zwischen dem Lesegerät 11 und der Auswerteeinheit 14 hergestellt. Möglich ist, dass eine drahtlose Datenverbindung bereits in dem Moment hergestellt wird, in dem der Zusteller 12 das Betätigungselement des Lesegeräts 11 betätigt und dadurch der Lesevorgang ausgelöst wird. Dies setzt voraus, dass eine Verbindung mit ausreichender Bandbreite aufgebaut werden kann.

Möglich ist auch, dass das Lesegerät 11 über einen bestimmten Zeitraum hinweg alle Leseergebnisse in einem lokalen Datenspeicher abspeichert. Dieser lokale Datenspeicher des Lesegeräts ist gegen Manipulation der abgespeicherten Daten gesichert, z. B. dadurch, dass die Daten verschlüsselt und/oder mit einer digitalen Signatur versehen werden. Regelmäßig wird das Lesegerät 11 mit der Auswerteeinheit 14 über ein ortsfestes Datenaustauschgerät verbunden, beispielsweise indem das Lesegerät 11 mit einer ortsfesten "docking station" verbunden wird. Die gesammelten Leseergebnisse werden vom Lesegerät über die "docking station" an die Auswerteeinheit 14 übermittelt. Dies geschieht beispielsweise täglich, nachdem der Zusteller 12 alle Postsendungen ausgeliefert hat. Nach der Übermittlung werden die Daten im lokalen Datenspeicher durch neuere Leseergebnisse überschrieben.

Folgende Leseergebnisse werden vom Lesegerät 11 an die Auswerteeinheit 14 übermittelt:
- das digitale Abbild Abb der Postsendung 2,
- eine Kennung für das Lesegerät 11 selber und
- eine Kennung für den Zusteller 12, der das Lesegerät 11 beim Abschluss des Transports verwendet hat.

Aus diesen Angaben ermittelt die Auswerteeinheit 14, welche Postsendung 2 der Zusteller 12 übergeben hat.

Weiterhin werden folgende Informationen an die Auswerteeinheit 14 übermittelt:
- der Zeitpunkt, an dem der Zusteller 12 die Postsendung 2 eingelegt / übergeben hat,
- das Strichmuster für den Zustellpunkt 10, mit dem die Postsendung 2 versehen ist, sowie
- den Ort, an dem der Zusteller 12 dies getan hat - vorausgesetzt der Ort wurde gemessen - oder
- die Kennzeichnung X-Punkt für den Zustellpunkt 10, an den der Zusteller 12 die Postsendung 2 übergeben hat - vorausgesetzt der Zustellpunkt 10 ist mit einer solchen Kennzeichnung versehen, z. B. mittels eines mobilen Datenspeichers.

In einer Ausgestaltung rekonstruiert die Auswerteeinheit 17 das Strichmuster für den Zustellpunkt aus dem digitalen Abbild Abb. In einer anderen Ausgestaltung rekonstruiert das Lesegerät 11 selber das Strichmuster, indem es das abgespeicherte Abbild auswertet. Anschließend decodiert es das Strichmuster und ermittelt dadurch die Kennung. Derartige Lesegeräte, Rekonstruktionsverfahren und Decodierungsverfahren sind z. B. aus Roger C. Palmer: "The Bar Code Book - Reading, Printing, and Specification of Bar Code Symbols", Helmers Publ., 2nd ed., 1991, bekannt.

Die Auswerteeinheit 14 besitzt vorzugsweise Lesezugriff auf einen Datenspeicher, in dem folgendes abgespeichert ist:
- eine Liste mit Kennzeichnungen von Zustellpunkten sowie
- eine rechnerverfügbare Landkarte, in der alle Zustellpunkte eingetragen sind.

Die Auswerteeinheit 14 vergleicht die übermittelten Angaben mit der Landkarte, um diese Angaben zu überprüfen und bei Mehrdeutigkeiten den richtigen Zustellpunkt zu ermitteln.

Die Auswerteeinheit 14 führt statistische Untersuchungen durch, z. B. wie lange eine Postsendung durchschnittlich braucht, wobei die durchschnittliche Transportzeit abhängig vom Start- und Zustellpunkt variiert.

Die Auswerteeinheit 14 erkennt bei dieser Überprüfung auch Fehler beim Transport und Manipulationsversuche. Sie vergleicht die Angaben zum Zustellpunkt 10, die die erste Sortieranlage 6 gelesen und an den Zentralrechner 3 übermittelt hat, mit der Position und /oder der Kennzeichnung des Zustellpunkts 10, den das Lesegerät 11 an die Auswerteeinheit 14 übermittelt hat. Falls die Abweichung größer als eine vorgegebene Schranke ist, so wurde die Postsendung 2 falsch zugestellt. Falls die übermittelte Position des Zustellpunkts 10 nicht mit der Lage des Zustellpunkts in der Landkarte übereinstimmt, so kann ein Manipulationsversuch vorliegen.

Die Auswerteeinheit 14 ist mit dem Zentralrechner 3 verbunden. Der Zentralrechner 3 ermittelt anhand des Merkmalsvektors, den die Auswerteeinheit 14 berechnet hat, den Datensatz 5 für die Postsendung 2 und ergänzt diesen Datensatz 5 um den Zeitpunkt und den Ort, an dem diese Postsendung 2 tatsächlich zugestellt wurde.

In der Protokollierungs-Datenbank 4 ist ein Datensatz 5 abgespeichert, der nach Abschluss des Transports folgende Informationen über die Postsendung 2 enthält:
- die Kennung der Postsendung (im Beispiel der Fig. 1 "12345"),
- eine Kennzeichnung X-Punkt des vorgegebenen Zustellpunkts (im Beispiel der Fig. 1 die Paketfachanlage 10),
- der Zeitpunkt, an dem die Postsendung 1 die erste Sortieranlage 6 durchlief und dort mit einer Kennung versehen wurde (20:11 Uhr)
- der Zeitpunkt, an dem die Postsendung 2 mit der Kennung die zweite Sortieranlage 8 durchlief (02:34 Uhr),
- der Zeitpunkt, an dem die Postsendung 2 zugestellt wurde (10:51 Uhr),
- die Kennzeichnung des Zustellpunkts 10, an dem die Postsendung tatsächlich zugestellt wurde (im Beispiel der Fig. 1 das Fach ABCD der Paketfachanlage 10),
- eine Kennung für das Lesegerät 11 und
- eine Kennung für den Zusteller 12.

Die Erfindung macht es überflüssig, dass ein Absender einer Postsendung eine spezielle Handlung vornimmt, damit der Transport und die Zustellung der Postsendung 2 überwacht werden. Insbesondere ist es nicht erforderlich - aber durchaus möglich - dass der Absender die zu überwachende Postsendung als Einschreiben in einem Postamt einliefert, wo sie vorab mit einer lesbaren Kennung versehen wird. Weiterhin ist es nicht erforderlich, dass der Absender oder eine Sortieranlage die Postsendung mit speziellen Vermerken oder Kennzeichnungen versieht.

Die Erfindung erfordert einen nur geringen zusätzlichen Aufwand. Der Zusteller 12 benötigt ein Lesegerät 11. Häufig führt er ohnehin ein solches Lesegerät 11 mit sich, z. B. um Einschreiben zu übergeben. Als einziger zusätzlicher Verfahrensschritt zum üblichen Ablauf beim Transport wird das digitale Abbild Abb der Postsendung 2 in dem Moment, in dem die Postsendung 2 den Zustellpunkt 10 erreicht, erzeugt. Optional wird zusätzlich der Zustellpunkt 10 selber erkannt.

**Bezugszeichenliste**

| *Bezugszeichen* | *Bedeutung* |
|---|---|
| 1 | Postsendung mit Kennzeichnung des Zustellpunkts 10 vor Generierung der Kennung |
| 2 | Postsendung mit Kennzeichnung des Zustellpunkts 10 nach Generierung der Kennung |
| 3 | Zentralrechner |
| 4 | zentrale Protokollierungs-Datenbank |
| 5 | Datensatz für die Postsendung in der Protokollierungs-Datenbank 4 |
| 6 | erste Sortieranlage |
| 7 | erstes Transportfahrzeug |
| 8 | zweite Sortieranlage |
| 9 | zweites Transportfahrzeug |
| 10 | Zustellpunkt; hier: Fach einer Paketfachanlage |
| 11 | tragbares Lesegerät |
| 12 | Zusteller |
| 13 | Kamera des Lesegeräts 11 |
| 14 | Auswerteeinheit |
| 20 | Nachricht mit der Zustellpunkt-Kennzeichnung X-Punkt und dem Zeitpunkt, an dem die Postsendung die erste Sortieranlage 6 durchläuft |
| 12345 | Kennung der Postsendung 2, Bestandteil des Datensatzes 5 |
| Abb | Abbild der Postsendung 2, wird von der Kamera 13 aufgenommen |
| ABCD | Kennzeichnung des freien Fachs der Paketfachanlage 10, in das die Postsendung 2 eingelegt wird |
| X-Punkt | Kennzeichnung des Zustellpunkts 10 |

## Patentansprüche

1. Verfahren zur Überwachung des Transports eines Gegenstands (2), insbesondere einer Postsendung, zu einem Zustellpunkt (10), wobei
der Gegenstand (2) mit einer Kennzeichnung (X-Punkt) des Zustellpunkts (10) versehen ist,
der Gegenstand während des Transports mindestens einmal eine Sortieranlage (6) durchläuft,
die Sortieranlage die Zustellpunkt-Kennzeichnung (X-Punkt) liest und die Fortsetzung des Transports des Gegenstands (2) an den Zustellpunkt (10) auslöst,
die gelesene Zustellpunkt-Kennzeichnung (X-Punkt) an einen Zentralrechner (3) übermittelt wird,
der Zentralrechner (3) die übermittelte Zustellpunkt-Kennzeichnung (X-Punkt) abspeichert,
Informationen über den Transport an den Zentralrechner (3) übermittelt werden und
der Zentralrechner (3) durch Auswertung der übermittelten Informationen ermittelt, von welchem derjenigen Gegenstände, die im vorgegebenen Zeitraum die Sortieranlage (6) durchlaufen haben, die übermittelten Informationen stammen,
**dadurch gekennzeichnet, dass**
die Sortieranlage (6)
- mehrere vorgegebene kennzeichnende Parameter misst und
- einen ersten Merkmalsvektor für den Gegenstand (2) generiert, der diese Parameterwerte umfasst,
wobei der Merkmalsvektor den Gegenstand (2) von allen anderen Gegenständen unterscheidet, die innerhalb eines vorgegebenen Zeitraums die Sortieranlage (6) durchlaufen haben,
beim Abschluss des Transports
- erneut die Werte gemessen werden, die die vorgegebenen Parameter für den Gegenstand (2) annehmen,
- ein zweiter Merkmalsvektor für den Gegenstand (2) generiert wird, der diese Parameter-Werte umfasst, und
- der Zeitpunkt, an dem der Transport des Gegenstands (2) abgeschlossen wird, gemessen wird, und
die übermittelten Informationen folgende Informationen über den Abschluss des Transports umfassen:
- den gemessenen Zeitpunkt und
- den zweiten Merkmalsvektor und
die Ermittlung des Gegenstands durch den Zentralrechner (3) den Schritt umfasst,
dass der Zentralrechner (3) den übermittelten zweiten Merkmalsvektor mit abgespeicherten Merkmalsvektoren vergleicht.

2. Verfahren nach Anspruch 1,
**dadurch gekennzeichnet, dass**
- die Messung des Zeitpunkts, an dem der Transport des Gegenstands (3) abgeschlossen wird, und
- die Messung des zweiten Merkmalsvektors
beim Abschluss des Transports unter Verwendung eines tragbaren Lesegeräts (11) durchgeführt werden.

3. Verfahren nach Anspruch 1 oder Anspruch 2,
**dadurch gekennzeichnet, dass**
das Lesegerät (11) ein Abbild des Gegenstands (2) erzeugt und
der zweite Merkmalsvektor unter Verwendung dieses Abbilds erzeugt wird.

4. Verfahren nach einem der Ansprüche 1 bis 3,
**dadurch gekennzeichnet, dass**
die Sortieranlage (6) einen Transport des Gegenstands an eine weitere Sortieranlage (8) auslöst,
der Gegenstand (2) während des Transports mindestens die weitere Sortieranlage (8) durchläuft und
die weitere Sortieranlage (8)
- die Zustellpunkt-Kennzeichnung (X-Punkt) ermittelt und
- die Fortsetzung des Transports des Gegenstands (2) an den Zustellpunkt (10) auslöst.
die Ermittlung der Zustellpunkt-Kennzeichnung durch die weitere Sortieranlage (8) die Schritte umfasst, dass die weitere Sortieranlage (8)
- Werte der Parameter des Gegenstands (2) misst,
- einen dritten Merkmalsvektor generiert, der diese Parameter-Werte umfasst, und
- den dritten Merkmalsvektor an den Zentralrechner (3) übermittelt,
der Zentralrechner (3) den übermittelten dritten Merkmalsvektor mit abgespeicherten Merkmalsvektoren vergleicht, um die Zustellpunkt-Kennzeichnung (X-Punkt) zu ermitteln, und die ermittelte Zustellpunkt-Kennzeichnung (X-Punkt) an die weitere Sortieranlage (8) übermittelt.

5. Verfahren nach einem der Ansprüche 1 bis 4,
**dadurch gekennzeichnet, dass**
die Position, an der sich der Gegenstand (2) während der Zeitpunkt-Messung befindet, gemessen wird und
die an den Zentralrechner (3) übermittelten Informationen zusätzlich die gemessene Position umfassen.

6. Verfahren nach Anspruch 5,
**dadurch gekennzeichnet, dass**
ein Lesezugriff des Zentralrechners (3) auf eine rechnerverfügbare Landkarte hergestellt wird,
wobei in der Landkarte mehrere mögliche Zustellpunkte eingetragen sind,
und der Zentralrechner (3) die gemessene und übermittelte Position mit den in der Landkarte eingetragenen möglichen Zustellpunkten vergleicht.

7. Verfahren nach einem der Ansprüche 1 bis 6,
**dadurch gekennzeichnet, dass**
der Gegenstand zu einer Aufnahmevorrichtung transportiert wird, die
- sich am Zustellpunkt (10) befindet,
- zur Aufnahme des Gegenstands (2) ausgestaltet ist und
- mit einer maschinenlesbaren Kennzeichnung (ABCD) versehen ist,
zu dem Zeitpunkt, an dem der Transport des Gegenstands abgeschlossen wird, die Kennzeichnung (ABCD) des Zustellpunkts (10) gelesen wird und
die übermittelten Informationen zusätzlich die gelesene Zustellpunkt-Kennzeichnung (ABCD) umfassen.

8. Verfahren nach Anspruch 7,
**dadurch gekennzeichnet, dass**
die Ermittlung des Gegenstands durch den Zentralrechner (3) den Schritt umfasst,
dass der Zentralrechner (3) die übermittelte Zustellpunkt-Kennzeichnung (ABCD) mit gelesenen Zustellpunkt-Kennzeichnungen (X-Punkt) vergleicht.

9. Verfahren nach Anspruch 7 oder Anspruch 8,
**dadurch gekennzeichnet, dass**
ein Lesezugriff des Zentralrechners (3) auf eine rechnerverfügbare Landkarte und eine Kennzeichnungs-Tabelle hergestellt wird,
wobei in der Landkarte mehrere mögliche Zustellpunkte eingetragen sind und
in der Kennzeichnungs-Tabelle für jeden in der Landkarte eingetragenen Zustellpunkt dessen Kennzeichnung abgespeichert ist,
und der Zentralrechner (3) die ermittelte und übermittelte Zustellpunkt-Kennzeichnung unter Verwendung der Kennzeichnungs-Tabelle mit den in der Landkarte eingetragenen möglichen Zustellpunkten vergleicht.

10. Verfahren nach einem der Ansprüche 1 bis 9,
**dadurch gekennzeichnet, dass**
der zu transportierende Gegenstand eine Postsendung (2) ist.

11. Vorrichtung zur Überwachung des Transports eines Gegenstands (2), insbesondere einer Postsendung, zu einem Zustellpunkt (10), wobei,
der Gegenstand (2) mit einer Kennzeichnung (X-Punkt) des Zustellpunkts (10) versehen ist,
der Transport die Schritte umfasst, dass
- der Gegenstand (2) während des Transports mindestens einmal eine Sortieranlage (6) durchläuft,
- die Sortieranlage (6) die Zustellpunkt-Kennzeichnung (X-Punkt) liest und die Fortsetzung des Transports an den Zustellpunkt (10) auslöst
die Vorrichtung
- einen Zentralrechner (3) und
- eine Datenbank (4)
umfasst,
der Zentralrechner (3) dazu ausgestaltet ist, die gelesene und übermittelte Zustellpunkt-Kennzeichnung (X-Punkt) in der Datenbank (4) abzuspeichern,
die Vorrichtung dazu ausgestaltet ist, dass Informationen über den Transport an den Zentralrechner (3) übermittelt werden, und
der Zentralrechner (3) dazu ausgestaltet ist, durch Auswertung der übermittelten Informationen zu ermitteln, von welchem derjenigen Gegenstände, die im vorgegebenen Zeitraum die Sortieranlage (6) durchlaufen haben, die übermittelten Informationen stammen
**dadurch gekennzeichnet, dass**
die Vorrichtung eine Lese- und Auswerteeinheit (11, 14) umfasst,
die Sortieranlage (6) dazu ausgestaltet ist,
- mehrere vorgegebene kennzeichnende Parameter zu messen und
- einen ersten Merkmalsvektor für den Gegenstand (2) zu generieren, der diese Parameterwerte umfasst,
wobei der Merkmalsvektor den Gegenstand (2) von allen anderen Gegenständen unterscheidet, die innerhalb eines vorgegebenen Zeitraums die Sortieranlage (6) durchlaufen haben,
die Lese- und Auswerteeinheit (11, 14) dazu ausgestaltet ist, beim Abschluss des Transports
- erneut die Werte zu messen, die die vorgegebenen Parameter für den Gegenstand (2) annehmen,
- einen zweiter Merkmalsvektor für den Gegenstand (2) zu generieren, der diese Parameter-Werte umfasst, und
- den Zeitpunkt, an dem der Transport des Gegenstands (2) abgeschlossen wird, zu messen, und
- den zweiten Merkmalsvektor und den gemessenen Zeitpunkt an den Zentralrechner (3) zu übermitteln, und
der Zentralrechner (3) dazu ausgestaltet ist, zur Ermittlung des Gegenstands den übermittelten zweiten Merkmalsvektor mit abgespeicherten Merkmalsvektoren zu vergleichen.

12. Vorrichtung nach Anspruch 11,
**dadurch gekennzeichnet, dass**
die Lese- und Auswerteeinheit (11, 14)
- ein tragbares Lesegerät (11) und
- eine Auswerteeinheit (14)
umfasst,
das Lesegerät (11) dazu ausgestaltet ist, beim Abschluss des Transports
- ein Abbild (Abb) des Gegenstands (2) zu erzeugen und an die Auswerteeinheit (14) zu übermitteln und
- den Zeitpunkt, an dem der Transport des Gegenstands (2) abgeschlossen wird, zu messen und
die Auswerteeinheit (14) dazu ausgestaltet ist,
unter Verwendung des Abbilds (Abb) den zweiten Merkmalsvektor für den Gegenstand (2) zu generieren und an den Zentralrechner (3) zu übermitteln.

## Claims

1. Method for monitoring the transport of an object (2), in particular of a postal item, to a delivery point (10), wherein
the object (2) is provided with an identifier (X-point) of the delivery point (10),
during the transport the object passes through a sorting system (6) at least once,
the sorting system reads the delivery point identifier (X-point) and triggers the continuation of the transport of the object (2) to the delivery point (10),
the read delivery point identifier (X-point) is transferred to a central computer (3),
the central computer (3) stores the transferred delivery point identifier (X-point),
information relating to the transport is transferred to the central computer (3) and
by evaluating the transferred information, the central computer (3) determines from which object, of objects which have passed through the sorting system (6) in the given period of time, the transferred information originates,
**characterised in that**
the sorting system (6)
- measures a number of predetermined identifying parameters and
- generates a first feature vector for the object (2) which comprises these parameter values,
wherein the feature vector distinguishes the object (2) from all other objects which have passed through the sorting system (6) within a predetermined period of time,
upon conclusion of the transport
- the values which the predetermined parameters assume for the object (2) are measured again,
- a second feature vector for the object (2) is generated, which comprises these parameter values, and
- the time instant at which the transport of the object (2) is concluded is measured, and
the transferred information comprises the following information relating to the conclusion of the transport:
- the measured time instant and
- the second feature vector and
the determination of the object by the central computer (3) comprises the step
that the central computer (3) compares the transferred second feature vector with stored feature vectors.

2. Method according to claim 1,
**characterised in that**
upon conclusion of the transport
- the time instant at which the transport of the object (3) is concluded, and
- the second feature vector
are measured using a portable reader (11).

3. Method according to claim 1 or claim 2,
**characterised in that**
the reader (11) generates an image of the object (2) and the second feature vector is generated using this image.

4. Method according to one of claims 1 to 3,
**characterised in that**
the sorting system (6) triggers a transport of the object to a further sorting system (8),
during the transport, the object (2) at least passes through the further sorting system (8) and
the further sorting system (8)
- determines the delivery point identifier (X point) and
- triggers the continuation of the transport of the object (2) to the delivery point (10).
the determination of the delivery point identifier by the further sorting system (8) comprises the steps that the further sorting system (8)
- measures values of the parameters of the object (2),
- generates a third feature vector, which comprises these parameter values, and
- transfers the third feature vector to the central computer (3),
the central computer (3) compares the transferred third feature vector with stored feature vectors, in order to determine the delivery point identifier (X-point), and transfers the determined delivery point identifier (X-point) to the further sorting system (8).

5. Method according to one of claims 1 to 4,
**characterised in that**
the position at which the object (2) is located during the measuring time instant is measured and
the information transferred to the central computer (3) additionally comprises the measured position.

6. Method according to claim 5,
**characterised in that**
the central computer (3) is granted read access to a map available on a computer,
wherein a number of possible delivery points are plotted on the map,
and the central computer (3) compares the measured and transferred position with the possible delivery points plotted on the map.

7. Method according to one of claims 1 to 6,
**characterised in that**
the object is transported to a receiving apparatus, which
- is located at the delivery point (10),
- is configured to receive the object (2) and
- is provided with a machine-readable identifier (ABCD), at the time instant at which the transport of the object is concluded, the identifier (ABCD) of the delivery point (10) is read and
the transferred information additionally comprises the read delivery point identifier (ABCD).

8. Method according to claim 7,
**characterised in that**
the determination of the object by the central computer (3) comprises the step
that the central computer (3) compares the transferred delivery point identifier (ABCD) with read delivery point identifiers (X-point).

9. Method according to claim 7 or claim 8,
**characterised in that**
the central computer (3) is granted read access to a map available on a computer and an identifier table is created,
wherein a number of possible delivery points are plotted on the map and
its identifier is stored in the identifier table for each delivery point plotted on the map,
and using the identifier table the central computer (3) compares the determined and transmitted delivery point identifier with the possible delivery points plotted on the map.

10. Method according to one of claims 1 to 9,
**characterised in that**
the object to be transported is a postal item (2).

11. Device for monitoring the transport of an object (2), in particular of a postal item, to a delivery point (10), wherein
the object (2) is provided with an identifier (X-point) of the delivery point (10),
the transport comprises the steps that
- during the transport the object (2) passes through a sorting system (6) at least once,
- the sorting system (6) reads the delivery point identifier (X-point) and triggers the continuation of the transport to the delivery point (10),
the device comprises
- a central computer (3) and
- a database (4),
the central computer (3) is configured to store the read and transferred delivery point identifier (X-point) in the database (4),
the device is configured so that information is transmitted via the transport to the central computer (3), and
by evaluating the transferred information, the central computer (3) is configured to determine from which object, of objects which have passed through the sorting system (6) in the given period of time, the transferred information originates
**characterised in that**
the device comprises a read and evaluation unit (11, 14), the sorting system (6) is configured
- to measure a number of predetermined identifying parameters and
- to generate a first feature vector for the object (2) which comprises these parameter values,
wherein the feature vector distinguishes the object (2) from all other objects which have passed through the sorting system (6) within a given period of time,
the read and evaluation unit (11, 14) is configured, upon conclusion of the transport,
- to re-measure the values which the predetermined parameters assume for the object (2),
- to generate a second feature vector for the object (2), which comprises these parameter values, and
- to measure the time instant at which the transport of the object (2) is concluded, and
- to transfer the second feature vector and the measured time instant to the central computer (3), and
in order to determine the object, the central computer (3) is configured to compare the transferred second feature vector with stored feature vectors.

12. Device according to claim 11,
**characterised in that**
the reading and evaluation unit (11, 14) comprises
- a portable reader (11) and
- an evaluation unit (14),
the reader (11) is configured, upon conclusion of the transport,
- to generate an image (Fig) of the object (2) and to transfer the same to the evaluation unit (14) and
- to measure the time instant at which the transport of the object (2) is concluded, and
the evaluation unit (14) is configured
to generate the second feature vector for the object (2) using the image (Fig) and to transfer the same to the central computer (3).

## Revendications

1. Procédé destiné à la surveillance du transport d'un objet (2), en particulier d'un envoi postal, à un point de livraison (10), dans lequel
l'objet (2) est doté d'une caractéristique (point X) du point de livraison (10),
l'objet passe au moins une fois dans une installation de tri (6) pendant le transport,
l'installation de tri lit la caractéristique du point de livraison (point X) et déclenche la poursuite du transport de l'objet (2) vers le point de livraison (10), la caractéristique du point de livraison (point X) lue est transmise à un ordinateur central (3),
l'ordinateur central (3) met en mémoire la caractéristique du point de livraison (point X) transmise,
des informations relatives au transport sont transmises à l'ordinateur central (3),
l'ordinateur central (3) détermine par le biais d'une évaluation des informations transmises duquel des objets qui sont passés dans l'installation de tri (6) au cours de l'intervalle de temps prédéfini proviennent les informations transmises,
**caractérisé en ce que**
l'installation de tri (6)
- mesure plusieurs paramètres caractéristiques prédéfinis
et
- génère un premier vecteur d'attribut pour l'objet (2), qui comprend des valeurs de paramètre,
dans lequel le vecteur d'attribut différencie l'objet (2) de tous les autres objets qui sont passés dans l'installation de tri (6) au cours d'un intervalle de temps prédéfini,
à la fin du transport
- la mesure des valeurs qui prennent les paramètres prédéfinis pour l'objet (2) est renouvelée,
- un deuxième vecteur d'attribut est généré pour l'objet (2), qui comprend ces valeurs de paramètre, et
- le moment auquel le transport de l'objet (2) est terminé est mesuré, et
les informations transmises comprennent les informations suivantes relatives à la fin du transport :
- le moment mesuré et
- le deuxième vecteur d'attribut et
la détermination de l'objet par le biais de l'ordinateur central (3) comprend l'étape au cours de laquelle l'ordinateur central (3) compare le deuxième vecteur d'attribut transmis à des vecteurs d'attribut mis en mémoire.

2. Procédé selon la revendication 1,
**caractérisé en ce que**
- la mesure du moment auquel le transport de l'objet (3) est terminé, et
- la mesure du deuxième vecteur d'attribut
sont réalisées à la fin du transport en utilisant un appareil de lecture portable (11).

3. Procédé selon la revendication 1 ou la revendication 2,
**caractérisé en ce que**
l'appareil de mesure (11) génère une image de l'objet (2) et
le deuxième vecteur d'attribut est généré en utilisant cette image.

4. Procédé selon l'une des revendications 1 à 3,
**caractérisé en ce que**
l'installation de tri (6) déclenche un transport de l'objet vers une autre installation de tri (8), l'objet (2) passe dans au moins une autre installation de tri (8) pendant le transport et
l'autre installation de tri (8)
- détermine la caractéristique de point de livraison (point X) et
- déclenche la poursuite du transport de l'objet (2) vers le point de livraison (10),
la détermination de la caractéristique du point de livraison par le biais de l'autre installation de tri (8) comprend les étapes au cours desquelles l'autre installation de tri (8)
- mesure les valeurs des paramètres de l'objet (2),
- génère un troisième vecteur d'attribut qui comprend ces valeurs de paramètre, et
- transmet le troisième vecteur d'attribut à l'ordinateur central (3),
l'ordinateur central (3) compare le troisième vecteur d'attribut transmis à des vecteurs d'attribut mis en mémoire pour déterminer la caractéristique du point de livraison (point X) et transmet la caractéristique du point de livraison (point X) à l'autre installation de tri (8).

5. Procédé selon l'une des revendications 1 à 4,
**caractérisé en ce que**
la position dans laquelle se trouve l'objet (2) pendant la mesure du moment est mesurée et
les informations transmises à l'ordinateur central (3) comprennent en outre la position mesurée.

6. Procédé selon la revendication 5,
**caractérisé en ce qu'**
un accès en lecture de l'ordinateur central (3) à une carte géographique disponible sur ordinateur est produit, dans lequel plusieurs points de livraison possibles sont inscrits sur la carte géographique,
et l'ordinateur central (3) compare la position mesurée et transmise aux points de livraison possibles inscrits sur la carte géographique.

7. Procédé selon l'une des revendications 1 à 6,
**caractérisé en ce que**
l'objet est transporté vers un dispositif de réception qui
- se trouve au niveau du point de livraison (11),
- est conçu pour la réception de l'objet (2) et
- est doté d'une caractéristique lisible par une machine (ABCD),
au moment où le transport de l'objet est terminé la caractéristique (ABCD) du point de livraison (10) est lue et
les informations transmises comprennent en outre la caractéristique du point de livraison (ABCD) lue.

8. Procédé selon la revendication 7,
**caractérisé en ce que**
la détermination de l'objet par le biais de l'ordinateur central (3) comprend l'étape au cours de laquelle l'ordinateur central (3) compare la caractéristique du point de livraison (ABCD) transmise à des caractéristiques du point de livraison (point X) lues.

9. Procédé selon la revendication 7 ou la revendication 8,
**caractérisé en ce qu'**
un accès en lecture de l'ordinateur central (3) à une carte géographique disponible sur ordinateur et à un tableau de caractéristiques est produit,
dans lequel plusieurs points de livraison possibles sont inscrits sur la carte géographique et
dans le tableau de caractéristiques pour chaque point de livraison inscrit sur la carte géographique la caractéristique de ce dernier est mise en mémoire,
et l'ordinateur central (3) compare la caractéristique du point de livraison déterminée et transmise aux points de livraison possibles inscrits sur la carte géographique en utilisant le tableau de caractéristiques.

10. Procédé selon l'une des revendications 1 à 9,
**caractérisé en ce que**
l'objet à transporter est un envoi postal (2).

11. Dispositif destiné à la surveillance du transport d'un objet (2), en particulier d'un envoi postal, vers un point de livraison (10), dans lequel
l'objet (2) est doté d'une caractéristique (point X) du point de livraison (10),
le transport comprend les étapes au cours desquelles
- l'objet (2) passe au moins une fois dans une installation de tri (6) pendant le transport,
- l'installation de tri (6) lit la caractéristique du point de livraison (point X) et déclenche la poursuite du transport vers le point de livraison (10) le dispositif comprend
- un ordinateur central (3) et
- une base de données (4),
l'ordinateur central (3) est conçu pour mettre en mémoire dans la base de données (4) la caractéristique du point de livraison (point X) lue et transmise,
le dispositif est conçu de sorte que des informations relatives au transport vers l'ordinateur central (3) sont transmises, et
l'ordinateur central (3) est conçu pour déterminer par le biais d'une évaluation des informations transmises duquel des objets qui sont passés dans l'installation de tri (6) au cours de l'intervalle de temps prédéfini proviennent les informations transmises,
**caractérisé en ce que**
le dispositif comprend une unité de lecture et d'évaluation (11, 14),
l'installation de tri (6) est conçue
- pour mesurer plusieurs paramètres caractéristiques prédéfinis et
- pour générer un premier vecteur d'attribut pour l'objet (2) qui comprend ces valeurs de paramètre,
dans lequel le vecteur d'attribut différencie l'objet (2) de tous les autres objets qui sont passés dans l'installation de tri (6) au cours d'un intervalle de temps prédéfini,
l'unité de lecture et d'évaluation (11, 14) est conçue, à la fin du transport
- pour renouveler la mesure des valeurs qui prennent les paramètres prédéfinis pour l'objet (2),
- pour générer un deuxième vecteur d'attribut pour l'objet (2) qui comprend ces valeurs de paramètre, et
- pour mesurer le moment auquel le transport de l'objet (2) est terminé, et
- pour transmettre le deuxième vecteur d'attribut et le moment mesuré à l'ordinateur central (3), et l'ordinateur central (3) est conçu pour comparer, en vue de la détermination de l'objet, le deuxième vecteur d'attribut transmis à des vecteurs d'attribut mis en mémoire.

12. Dispositif selon la revendication 11,
**caractérisé en ce que**
l'unité de lecture et d'évaluation (11, 14) comprend
- un appareil de lecture portable (11) et
- une unité d'évaluation (14),
l'appareil de lecture (11) est conçu, à la fin du transport,
- pour générer une image (Abb) de l'objet (2) et la transmettre à l'unité d'évaluation (14) et
- pour mesurer le moment auquel le transport de l'objet (2) est terminé et
l'unité d'évaluation (14) est conçue pour générer le deuxième vecteur d'attribut pour l'objet (2) en utilisant l'image (Abb) et le transmettre à l'ordinateur central (3).
